# EUROPÄISCHE PATENTSCHRIFT

(11) **EP 2 574 236 B1**
(45) Veröffentlichungstag und Bekanntmachung des Hinweises auf die Patenterteilung: **14.05.2014**
(21) Anmeldenummer: 12401194.1
(22) Anmeldetag: 24.09.2012
(51) Int. Cl.: A01M 7/00

(54) **Landwirtschaftliche Feldspritze**
Agricultural field spraying device
Pulvérisateur agricole à cultures

(30) Priorität: 28.09.2011 DE 102011054001
(43) Veröffentlichungstag der Anmeldung: 03.04.2013
(73) Patentinhaber: Amazonen-Werke H. Dreyer GmbH & Co. KG, 49205 Hasbergen (DE)
(72) Erfinder: Resch, Rainer, 49170 Hagen a TW (DE); Scheufler, Bernd, 49205 Hasbergen (DE)

(56) Entgegenhaltungen:
- DE-A1- 3 120 470
- DE-A1- 3 824 744
- DE-A1- 10 247 490
- DE-A1-102007 053 114

## Beschreibung

Eine derartige landwirtschaftliche Feldspritze ist in der DE 10 2007 053 114 A1 beschrieben. Bei dieser Feldspritze soll bei der Ausbringung der letzten Befüllung des Spritzmittelbehälters für die noch zu behandelnde landwirtschaftliche Fläche, das Spritzmittel in möglichst gleichmäßiger Weise unter der Berücksichtigung, dass bei Beendigung der Behandlung der gesamten Fläche zumindest annähernd das gesamte angemischte Spritzmittel aus dem Spritzmitteltank ausgebracht wird. Hierbei wird aufgrund des hinterlegten Programms in Verbindung mit einer in dem Speicher hinterlegten Applikationskarte für die zu behandelnde Fläche und einem Ortungssystem sowie der Feldspritze zugeordneten Sensoren zur Ermittlung der ausgebrachten Flüssigkeitsmittel die tatsächlich ausgemachte Menge ständig ermittelt, mit der Sollmenge und der noch zu behandeln Restfläche verglichen. Aus diesen Daten berechnet der Bordcomputer die jeweils tatsächlich auszubringende Pflanzenschutzmittelmenge und passt sich ständig der Restfläche an, so dass bei Beendigung und Fertigstellung der zu behandelnde Fläche quasi punkt- beziehungsweise zielgenau sämtliche angemischte Spritzmittelbrühe auf der zu behandelnde Fläche ausgebracht ist.

Jetzt besteht jedoch das Problem, dass es Regelungenauigkeiten gibt, so dass die Gefahr besteht, weil bei dieser bekannten Regelung zugelassen wird, dass auch weniger als die Sollmenge an Spritzmittelbrühe ausgebracht werden darf, auf der allerletzten Restfläche keine Spritzmittelbrühe mehr zur Verfügung steht.

Der Erfindung liegt die Aufgabe zu Grunde, in jedem Fall sicherzustellen, dass auf der allerletzten zu behandelnden Restfläche noch Spritzmittelbrühe ausgebracht wird.

Diese Aufgabe der erfindungsgemäß durch das Merkmal des Kennzeichens des Anspruchs 1. gelöst.

Infolge dieser Maßnahme wird die variable Ausbringmenge auf der Restfläche so geregelt, dass zu Beginn der Endphase des Ausbringvorganges, dies ist der Zeitpunkt, an dem die noch zu behandelnde Fläche exakt berechenbar ist, im Spritzmittelbrühebehälter etwas mehr Spritzbrühe vorhanden ist, als für die noch zu behandelnde Fläche noch erforderlich wäre. Es wird hierdurch vermieden, dass infolge von Messfehler auf den letzten Metern keine Spritzbrühe mehr vorhanden ist.

Die Arbeitsweise und Funktionsweise der Feldspritze ist folgende:

Im Laufe des Ausbringens der letzten Füllmenge Pflanzenschutzmittel, die sich in dem Behälter der Pflanzenschutzspritze befindet, um die behandelnde Fläche vollständig zu behandeln, wird in dem als Bordcomputer ausgebildeten Steuer- und Regeleinrichtung das in dem Speicherprogramm hinterlegte Programm aufgerufen, in dem hinterlegt ist, dass bei vollständiger Behandlung der zu behandelnden Fläche auch die letzte Füllung des Spritzmittelbehälters verbraucht ist. Hierbei wird die Flüssigkeitsmenge im Spritzbehälter ständig gemessen und die verbrauchte Menge mit der behandelnden Fläche verglichen. Die Durchflussmesser und sonstigen Messgeber werden dann automatisch nachgeeicht und die Ausbringmenge entsprechende korrigiert, dass am Ende der behandelnden Fläche die sich im Spritzmittelbehälter noch befindliche Menge zumindest annähernd vollständig verbraucht ist.

Dies geschieht nach folgender Vorgehensweise, dass aufgrund des in dem Speicher hinterlegten Programms die Steuer- und Regeleinrichtung, die als Bordcomputer ausgebildet ist, in der Lage ist, bei der Ausbringung der letzten Füllung des Spritzmittelbehälters für die zu behandelnden landwirtschaftliche Fläche, das Spritzmittel in möglichst gleichmäßiger Weise unter Berücksichtigung, dass bei Beendigung der Behandlung der gesamten Fläche zumindest annähernd das gesamte angemischte Spritzmittel, insbesondere das aus dem Spritzmitteltank ausgebracht ist.

Hierbei ist das Programm hierzu derart ausgelegt ist, dass zumindest in der zweiten Hälfte der letzten Arbeitsbahn zur Beendigung der zu behandelnden Fläche die jeweils tatsächlich eingestellte Ausbringungsmenge gleich oder größer als die Sollausbringungsmenge ist. Das Programm berechnet die zu Beginn der letzten Arbeitsbahn sich noch in dem Behälter befindende Menge so voraus, dass sich in dem Behälter zu diesem Zeitpunkt noch eine größere Flüssigkeitsmenge, als für die für die letzte Arbeitsbahn zu behandelnde Fläche erforderlich ist, befindet.

Die variable Ausbringmenge wird auf der Restfläche so geregelt, dass zu Beginn der Endphase des Ausbringvorganges, dies ist der Zeitpunkt, an dem die noch zu behandelnde Fläche exakt berechenbar ist, im Spritzmittelbrühebehälter etwas mehr Spritzbrühe vorhanden ist, als für die noch zu behandelnde Fläche noch erforderlich wäre. Es wird hierdurch vermieden, dass infolge von Messfehler auf den letzten Metern keine Spritzbrühe mehr vorhanden ist.

In der Endphase wird so vorgegangen, dass immer die noch im Pflanzenbrühebehälter vorhandene Pflanzenschutzmittelmenge größer als die eigentlich noch für die Restfläche benötigte Sollmenge ist. Es wird somit in der Endphase immer etwas mehr Pflanzenschutzmittel als die eigentliche Sollmenge ausgebracht, diese tatsächlich ausgebrachte Menge liegt aber immer innerhalb der zulässigen Toleranzen.

Die Endphase läßt sich folgendermaßen definieren:

Endphase ist der Bereich, in dem die noch zu behandelnde Fläche exakt vorausberechnen läßt, z.B. letzte Fahrspur ohne Wendemanöver.

## Patentansprüche

1. Landwirtschaftliche Feldspritze mit einer Spritzeinheit, die mindestens einen Spritz- und/oder Flüssigkeitsbehälter, zumindest eine mit dem Behälter verbundenen Pumpe und zumindest einen Strömungsmittelkreis besitzt, welcher Spritzdüsen und diese mit der Pumpe verbindende Leitungen aufweist, einer vorzugsweise als Bordcomputer ausgebildeten elektronischen Steuer- und/oder Regeleinrichtung zum Steuern und/oder Regeln der Betriebsweise der Feldspritze während des Spritzvorganges, sowie Mitteln zum Steuern und/oder Regeln des Spritzvorganges, wobei diese Mittel von der Steuer- und/oder Regeleinheit ansteuerbare, motorisch betätigbare Ventile aufweist, wobei die Steuer- und/oder Regeleinheit zumindest einen Speicher, in dem zumindest ein Programm verschiedenen Betriebsweisen der Feldspritze hinterlegt ist, aufweist, wobei in dem Speicher zumindest ein Programm abgespeichert ist, so dass die Steuer- und/oder Regeleinheit in der Lage ist, bei der Ausbringung der letzten Füllung des Spritzmittelbehälters für die zu behandelnde landwirtschaftliche Fläche, das Spritzmittel in möglichst gleichmäßiger Weise unter Berücksichtigung, wobei bei Beendigung der Behandlung der gesamten Fläche zumindest annähernd das gesamte angemischte Spritzmittel, insbesondere aus dem Spritzmitteltank ausgebracht ist, wobei das Programm hierzu derart ausgelegt ist, dass zumindest in der zweiten Hälfte der letzten Arbeitsbahn zur Beendigung der zu behandelnden Fläche die jeweils tatsächlich eingestellte Ausbringungsmenge gleich oder größer als die Sollausbringungsmenge ist, **dadurch gekennzeichnet, dass** das Programm die zu Beginn der letzten Arbeitsbahn sich noch in dem Behälter befindende Menge so vorausberechnet, dass sich in dem Behälter zu diesem Zeitpunkt noch eine größere Flüssigkeitsmenge, als für die für die letzte Arbeitsbahn zu behandelnde Fläche erforderlich ist, befindet.

## Claims

1. Agricultural field sprayer having a spraying unit which has at least one spraying container and/or liquid container, at least one pump which is connected to the container and at least one fluid circuit which has spray nozzles and lines connecting them to the pump, an electronic open-loop and/or closed-loop control device which is preferably embodied as an on-board computer and has the purpose of performing open-loop and/or closed-loop control of the operating mode of the field sprayer during the spraying process, as well as means for performing open-loop and/or closed-loop control of the spraying process, wherein these means have valves which can be actuated by the open-loop and/or closed-loop control unit and can be activated by motor, wherein the open-loop and/or closed-loop control unit has at least one memory in which at least one program for various operating modes of the field sprayer is stored, wherein in the memory at least one program is stored such that, during the discharging of the last filling of the fluid container for the agricultural surface to be treated, the open-loop and/or closed-loop control unit is capable the spraying medium in as uniform a fashion as possible taking into account, wherein when the treatment of the entire surface has finished at least approximately all of the spraying medium added to the mixture is discharged, in particular from the spraying medium tank, wherein the program is for this purpose configured in such a way that, at least in the second half of the last working path for finishing the surface to be treated, the discharge quantity which is respectively actually set is equal to or larger than the setpoint discharge quantity, **characterized in that** the program precalculates the quantity still located in the container at the start of the last working path in such a way that a larger quantity of fluid than is necessary for the surface to be treated for the last working path is still located in the container at this time.

## Revendications

1. Pulvérisateur de cultures agricole comprenant une unité de pulvérisation qui possède au moins un récipient de pulvérisation et/ou de liquide, au moins une pompe connectée au récipient et au moins un circuit hydraulique, lequel présente des buses de pulvérisation et des conduites reliant celles-ci à la pompe, un dispositif de commande et/ou de régulation électronique réalisé de préférence en tant qu'ordinateur de bord pour commander et/ou réguler le mode de fonctionnement du pulvérisateur de cultures pendant l'opération de pulvérisation, ainsi que des moyens pour commander et/ou réguler l'opération de pulvérisation, dans lequel ces moyens présentent des soupapes à commande motorisée, pouvant être commandées par l'unité de commande et/ou de régulation, dans lequel l'unité de commande et/ou de régulation présente au moins une mémoire dans laquelle est consigné au moins un programme pour différents modes de fonctionnement du pulvérisateur de cultures, dans lequel au moins un programme est mémorisé dans la mémoire, de sorte que l'unité de commande et/ou de régulation soit en mesure, lors de la décharge du dernier remplissage du récipient d'agent de pulvérisation pour la surface agricole à traiter, l'agent de pulvérisation de manière aussi uniforme que possible en tenant compte, dans lequel, à la fin du traitement de toute la surface, au moins approximativement tout l'agent de pulvérisation mélangé est notamment déchargé du réservoir d'agent de pulvérisation, dans lequel le programme est à cet effet conçu de telle sorte qu'au moins dans la deuxième moitié de la dernière voie de travail pour finir la surface à traiter la quantité à décharger à chaque fois effectivement ajustée soit supérieure ou égale à la quantité de consigne à décharger, **caractérisé en ce que** le programme calcule au préalable la quantité se trouvant encore dans le récipient au début de la dernière voie de travail de telle sorte qu'il se trouve dans le récipient à cet instant encore une plus grande quantité de liquide que ce qui est nécessaire pour la surface à traiter pour la dernière voie de travail.
